# EUROPEAN PATENT APPLICATION

(11) **EP 3 460 505 A1**
(43) Date of publication of application: **27.03.2019**
(21) Application number: 16902433.8
(22) Date of filing: 20.05.2016
(51) Int. Cl.: G01S 7/02, G01S 7/03, G01S 13/95

(54) **WEATHER RADAR DEVICE**

(71) Applicant: Mitsubishi Electric Corporation, Chiyoda-ku Tokyo 100-8310 (JP)
(72) Inventor: NAKAMIZO, Takamichi, Tokyo 100-8310 (JP); MATSUDA, Tomoya, Tokyo 100-8310 (JP); KAKIMOTO, Ikuya, Tokyo 100-8310 (JP)
(74) Representative: Trinks, Ole
(86) International application number: PCT/JP2016/064978
(87) International publication number: WO 2017/199414

(57) **Abstract**

In a weather radar apparatus, an array antenna (11) includes antenna elements arranged in a horizontal direction and an elevation angle direction to radiate transmission waves into space and receive reflected waves which are the transmission waves reflected from space. An antenna driver (15) rotates the array antenna (11) in an azimuth direction. A transmitter (12) controls the antenna elements to radiate the transmission waves with controlled amplitudes and phases respectively so as to form a transmission fan beam extending in the azimuth direction. A reception beam former (18) processes reception signals generated by the antenna elements from the reflected waves so as to form a plurality of reception beams in the azimuth direction. A reception beam allocator (19) receives an azimuth at which the array antenna (11) is oriented, and allocates the reception beams to respective azimuth ranges which are predetermined ranges of azimuth. A weather observer (21) obtains information about a result of weather observation for each of the azimuth ranges, from the reception beams allocated to the respective azimuth ranges by the reception beam allocator (19).

## Description

### TECHNICAL FIELD

The present disclosure relates to a weather radar apparatus, and particularly relates to a weather radar apparatus including a two-dimensional array antenna of an active phased array antenna system.

### BACKGROUND ART

One of the apparatuses observing weather phenomena quickly is a weather radar apparatus applied with a one-dimensional phased array system. The weather radar apparatus disclosed in Japanese Patent Laid-Open JP 2010-256 333 A (Patent Document 1) transmits fan beams being wide in the elevation angle direction and receives multiple pencil-shaped beams. The weather radar apparatus performs electronic scanning by fan beams in the elevation angle direction and observes a target in an observation range in the elevation angle direction by dividing into a plurality of regions so as to observe a target.

### CITATION LIST

### PATENT DOCUMENT

Patent Document 1: Japanese Patent Laid-Open JP 2010-256 333 A

### SUMMARY OF INVENTION

### TECHNICAL PROBLEM

As described above, the conventional weather radar apparatus applied with the one-dimensional phased array system uses fan beams wide in the elevation angle direction, and performs electronic scanning by the fan beams in the elevation angle direction to observe the observation range in the elevation angle direction by dividing into a plurality of regions (observation elevation angles). The conventional weather radar apparatus performs observation in a plurality of directions simultaneously using a plurality of reception pencil beams formed at respective observation elevation angles in the fan beam. The reception pencil beams are formed by DBF (Digital Beam Forming) performed on received waves generated from the fan beam. DBF is a technique that can form a reception beam in any direction. In DBF, a signal received by each antenna element of the array antenna is subjected to A/D conversion, and thereafter the phase of each of the digital signals is adjusted and accordingly the reception beam is formed. In recent years, DBF is employed also for the weather radar.

In general, a radar radiates pulsed radio waves into the air and observes reflected waves from a target to be observed. In this way, the radar recognizes the distance to and the position of the target. The number of observation hits is the number of times transmission waves hit the target (the number of times pulsed radio waves are transmitted) when the antenna makes a single rotation in the azimuth direction and the radar radiates transmission waves in all the directions. As an example, 32 observation hits are required. The conventional system has a limitation in mechanical scanning speed in the azimuth direction from the following reasons. Due to a narrow observation range in the azimuth direction, the scanning speed has to be low in order to ensure a required number of observation hits for observation in all the directions. The higher the scanning speed, the lower the resolution in the azimuth direction. Therefore, the conventional system is not suitable for observation of a phenomenon that requires a high frequency observation, such as tornado which is a local phenomenon in terms of space and time. Moreover, to track a local weather phenomenon moving or expanding in the azimuth direction, driving of the antenna in azimuth direction is required, and observation of the local weather phenomenon takes a considerable time. Things mentioned above can be applied to the general parabola antenna type weather radar.

The conventional system uses a beam narrow in the azimuth direction and wide in the elevation angle direction and observes a target while performing mechanical scanning in the azimuth direction. In this case, the direction in which the antenna is oriented varies in the azimuth direction by the mechanical driving and therefore, for each observation hit, the orientation direction of the antenna is displaced. Specifically, when the orientation direction of the antenna is changed at a timing when one-pulse transmission wave is transmitted from the orientation direction of the antenna at another timing when the previous one-pulse transmission wave has been transmitted, the same weather phenomenon is not observed even if the weather phenomenon to be observed does not move. Accordingly, the resolution in the azimuth direction becomes worse, that is, wider than the beam width in the azimuth direction. Things mentioned above can be applied to the general parabola antenna type weather radar.

A principal object of the present disclosure is to provide a weather radar apparatus capable of mechanical scanning in the azimuth direction at a higher speed than the conventional apparatus while ensuring a sufficient number of observation hits.

### SOLUTION TO PROBLEM

In summary, the present disclosure provides a weather radar apparatus including an array antenna, an antenna driver, a transmitter, a reception beam former, a reception beam allocator, and a weather observer. The array antenna includes antenna elements arranged in a horizontal direction and an elevation angle direction to radiate transmission waves into space and receive reflected waves which are the transmission waves reflected from space. The antenna driver rotates the array antenna mechanically in an azimuth direction. The transmitter controls the antenna elements to radiate the transmission waves with controlled amplitudes and phases respectively so as to form a transmission fan beam in a sector having a central angle more than or equal to a predetermined angular width in the azimuth direction. The reception beam former processes reception signals each generated by each of the antenna elements from the reflected waves of transmission fan beams so as to form a plurality of reception beams in the azimuth direction. The reception beam allocator receives an antenna azimuth and allocates the reception beams to respective azimuth ranges. The antenna azimuth is an azimuth at which the array antenna rotated by the antenna driver is oriented, and the azimuth ranges are each a predetermined range of azimuth. The weather observer obtains information about a result of weather observation for each of the azimuth ranges, from the reception beams allocated to the azimuth range by the reception beam allocator.

### ADVANTAGEOUS EFFECTS OF INVENTION

According to the present disclosure, mechanical scanning in the azimuth direction is performed faster than the conventional system while ensuring a sufficient number of observation hits.

### BRIEF DESCRIPTION OF DRAWINGS

- FIG. 1: shows a configuration of a weather radar apparatus in a first embodiment.
- FIG. 2: is a conceptual diagram showing shapes, in the azimuth direction, of a transmission fan beam and reception pencil beams used in the weather radar apparatus in the first embodiment.
- FIG. 3: is a conceptual diagram showing shapes, in the elevation angle direction, of a transmission fan beam and reception pencil beams used in the weather radar apparatus in the first embodiment.
- FIG. 4: is a conceptual diagram showing shapes of a transmission fan beam and reception pencil beams when an array antenna is oriented in a certain azimuth direction.
- FIG. 5: is a conceptual diagram showing shapes of a transmission fan beam and reception pencil beams when the azimuth direction of the array antenna is rotated by an angle φd from the azimuth direction thereof shown in FIG. 4.
- FIG. 6: is a flowchart illustrating a process for reallocating reception pencil beams, as shown in FIGs. 4 and 5.
- FIG. 7: illustrates a method for observing a target region in a plurality of elevation angle directions by transmission beams and reception beams.
- FIG. 8: shows an example where a single reception pencil beam is used in the azimuth direction.
- FIG. 9: shows a manner in which a weather radar apparatus in a second embodiment generates reception pencil beams with corrected directions.
- FIG. 10: is a flowchart illustrating a process for correcting the angle of reception pencil beams shown in FIG. 9.
- FIG. 11: shows a configuration of a weather radar apparatus in a third embodiment.
- FIG. 12: shows a manner in which the weather radar apparatus in the third embodiment observes a predetermined azimuth range without mechanical driving, in order to observe a local weather phenomenon.
- FIG. 13: shows a manner in which the weather radar apparatus in the third embodiment conducts observation by electronic scanning in the elevation angle direction, in order to observe the local weather phenomenon.
- FIG. 14: shows a difference in the beam shape in the elevation angle direction, between a high-elevation-angle beam and a low-elevation-angle beam of a weather radar apparatus in a fourth embodiment.
- FIG. 15: shows a difference in the beam shape in the azimuth direction, between a high-elevation-angle beam and a low-elevation-angle beam of the weather radar apparatus in the fourth embodiment.

### DESCRIPTION OF EMBODIMENTS

Embodiments of the present disclosure are described in detail hereinafter with reference to the drawings. In the following, a plurality of embodiments are described. It is intended originally that features described in each of the embodiments may be combined as appropriate. The same or corresponding parts in the drawings are denoted by the same reference signs, and a description thereof is not repeated herein.

### First Embodiment

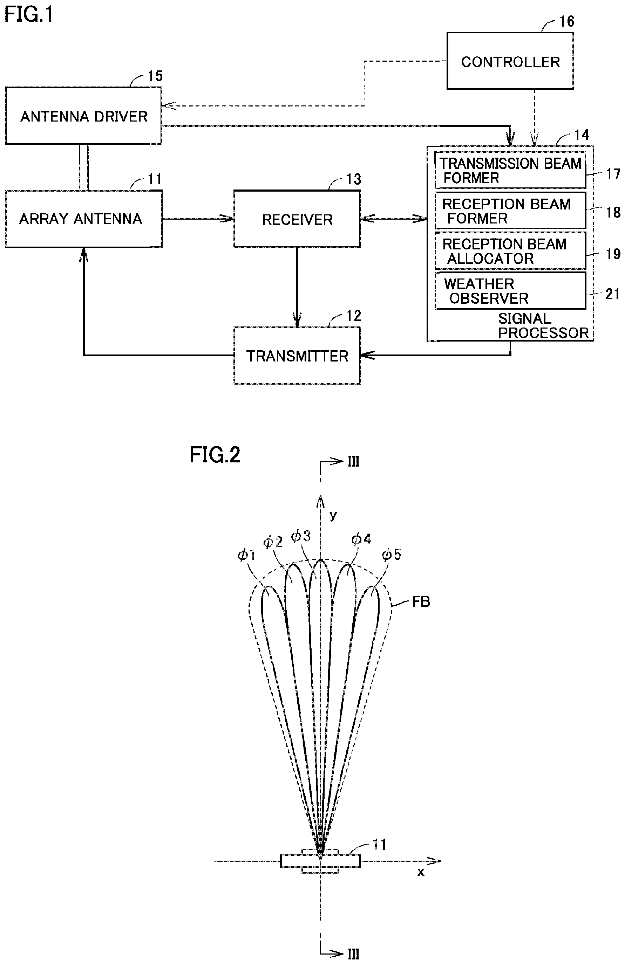

FIG. 1 shows a configuration of a weather radar apparatus in a first embodiment. The weather radar apparatus shown in FIG. 1 includes an array antenna 11, a transmitter 12, a receiver 13, a signal processor 14, an antenna driver 15, and a controller 16. Controller 16 controls signal processor 14 and antenna driver 15.

Array antenna 11 includes multiple sets of receiving antenna elements and transmitting antenna elements or a plurality of transmitting/receiving antenna elements arranged in a two-dimensional array in the horizontal direction and the elevation angle direction. Array antenna 11 is an active phased array antenna. Each transmitting antenna element radiates, into space, a transmission signal in the form of radio wave having the phase and the amplitude controlled by a control signal supplied from transmitter 12. Thus, in both the azimuth direction and the elevation angle direction, the transmission beam formed in a fan shape can be changed in its central angle, radiation direction, and shape. A sector, which is a fan shape, having a large central angle is called wide or broad while a sector having a small central angle is called narrow. Each receiving antenna element generates reception signals from the received reflected waves and outputs the reception signals to receiver 13.

Array antenna 11 is driven mechanically in the azimuth direction by antenna driver 15 and capable of observation over 360° in the azimuth direction. Specifically, array antenna 11 is configured to be mechanically rotatable 360° in the azimuth direction. The fact that array antenna 11 is driven mechanically in the azimuth direction means that array antenna 11 is rotated around a vertical axis.

Transmitter 12 sends a control signal to each transmitting antenna element of array antenna 11. The phase and the amplitude of the transmission wave radiated from each transmitting antenna element are controlled by the control signal so as to achieve the following.
(1) A fan-shaped transmission beam (referred to as transmission fan beam hereinafter) narrow in the elevation angle direction and wide in the azimuth direction is radiated from array antenna 11 into the air.
(2) Electronic scanning in the elevation angle direction is performed by changing the elevation angle direction in which the transmission fan beam is radiated. The transmission fan beam is shaped to form a sector having a central angle more than or equal to a predetermined angular width in the azimuth direction. Since the central angle, in the azimuth direction, of the transmission fan beam is more than or equal to a predetermined angular width, the reception signals generated from the reflected waves of the transmission fan beam can be processed to form a plurality of reception beams in the azimuth direction.
(3) Depending on the elevation angle at which the beam is directed, the beam shape of the transmission fan beam radiated from array antenna 11 can be changed in one of or both the elevation angle direction and the azimuth direction.

Signal processor 14 includes a transmission beam former 17, a reception beam former 18, a reception beam allocator 19, and a weather observer 21. Transmission beam former 17, reception beam former 18, reception beam allocator 19, and weather observer 21 are controlled by controller 16.

Transmission beam former 17 has a plurality of sets of phase control information and amplitude control information of signals which supply power to antenna elements to form a shape of the transmitting fan beam, each set of phase control information and amplitude control is prepared for each shape of the transmitting fan beam. The phase control information and the amplitude control information for forming the transmission beam in an intended shape is referred to as transmission beam shape information herein. Transmission beam former 17 has less than or equal to a predetermined number of pieces of transmission beam shape information. In response to a command from controller 16, transmission beam former 17 sends, to transmitter 12, the phase control information and the amplitude control information corresponding to the transmission beam shape information specified by the command. Transmission beam former 17 also controls the type and the timing of a source signal generated by receiver 13 and used for pulse generation. Based on the source signal supplied from receiver 13, transmitter 12 generates pulses. In a case where transmitter 12 has an oscillator, the source signal is generated by transmitter 12.

Transmission waves radiated from array antenna 11 into the air are reflected from an observation target such as rain, snow, or the like, and received as reflected waves by array antenna 11. Array antenna 11 generates reception signals from the reflected waves and sends the reception signals to receiver 13.

Receiver 13 receives the reception signal from each antenna element of array antenna 11 and performs down-conversion and A/D conversion on the reception signal. Receiver 13 sends the A/D converted reception signals to signal processor 14. The timings at which receiver 13 receives the reception signals are controlled by signal processor 14.

Reception beam former 18 performs, on the received signals from receiver 13, I/Q detection and thereafter DBF to form pencil-shaped reception beams each having a narrow beam width (hereinafter also referred to as reception pencil beam). Reception beam former 18 forms a plurality of reception beams within the azimuth range and the elevation angle range across which the transmission fan beam is radiated.

Reception beam allocator 19 allocates a plurality of reception beams in each set in a plurality of sets of the plurality of reception beams to respective azimuth ranges each being a predetermined range of the azimuth. Each set of the plurality of reception beams is generated from reception signals obtained when array antenna 11 is oriented in an azimuth, which is different for each set of the plurality of reception beams. Weather observer 21 obtains information about the result of weather observation from the reception beams allocated to each of azimuth ranges by reception beam allocator 19, and accumulates the results. Set of reception beams allocated to each of azimuth ranges may be stored and, after allocating all reception beams to the azimuth range, the set of reception beams allocated to the azimuth range may be processed by weather observer 21.

FIG. 2 is a conceptual diagram showing shapes, in the azimuth direction, of a transmission fan beam and reception pencil beams used in the weather radar apparatus in the first embodiment. The shape of transmission fan beam FB is indicated by a broken line, and the shapes of reception pencil beams φ1 to φ5 are each indicated by a solid line. In FIG. 2, for transmission fan beam FB radiated at a time, observation can be performed simultaneously at respective azimuths of five directions through respective reception pencil beams φ1 to φ5.

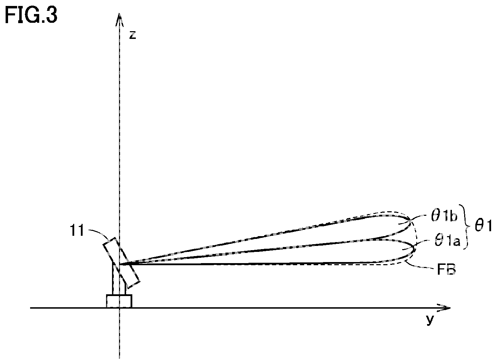

FIG. 3 is a conceptual diagram showing shapes, in the elevation angle direction, of a transmission fan beam and reception pencil beams used in the weather radar apparatus in the first embodiment. In the first embodiment, observation is performed using a reception pencil beam group θ1 in which each pencil beam is narrower than transmission fan beam FB in the elevation angle direction. Reception pencil beam group θ1 includes a reception pencil beam θ1a and a reception pencil beam θ1b. While reception pencil beam group θ1 shown in FIG. 3 has two rows in the elevation angle direction, it may have three or more rows or a single row in the elevation angle direction.

Transmission fan beam FB has a fan shape also in the cross section in the elevation angle direction. The fan shape of transmission fan beam FB in the azimuth direction is wider than the fan shape thereof in the elevation angle direction. In other words, transmission fan beam FB is a beam having a first cross section in the azimuth direction in a fan shape and a second cross section in the elevation angle direction also in a fan shape, and the central angle of the fan shape in the second cross section is narrower than the central angle of the fan shape in the first cross section.

FIG. 3 shows that fan beam FB can be transmitted to perform observation simultaneously at each of elevation angles of two directions of reception pencil beams θ1a, θ1b. FIG. 3 is a cross section along III-III in FIG. 2. For each of reception pencil beams φ1 to φ5, reception pencil beams θ1a, θ1b at respective elevation angles in two directions are formed similarly. The total number of the reception pencil beams is therefore 5×2 = 10.

More specifically, under control by transmitter 12, array antenna 11 radiates a transmission fan beam. The fan beam is reflected, reflected waves are received, reception signals generated from the reflected waves are subjected to DBF performed at signal processor 14, and accordingly, 5×2 reception pencil beams are generated. The intensity and the phase of the reception signal and the like for each reception pencil beam are observed. Thus, observation can be performed in 5 azimuth directions and two elevation angle directions. In this way, observation can be performed in 10 directions simultaneously.

DBF can freely change the configuration of reception pencil beams. The configuration of reception pencil beams is not limited to the matrix in five azimuth directions and two elevation angle directions. A matrix of reception pencil beams in one elevation angle direction, or a matrix of reception pencil beams in three or more elevation angle directions may also be used. Reception beam former 18 may perform phase control and weighting-factor control in DBF to change the shape of the reception beam depending on the elevation angle at which the beam is directed.

Reception beam allocator 19 allocates reception beams to be used for signal processing by weather observer 21, to respective azimuth ranges depending on the orientation direction of the array antenna, based on an angular signal from antenna driver 15 rotating mechanically array antenna 11.

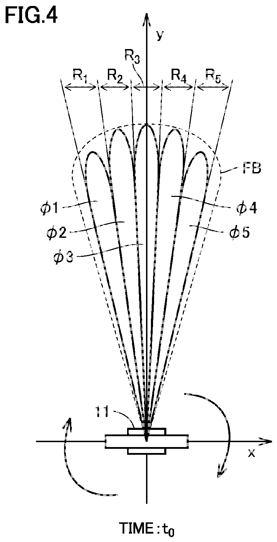

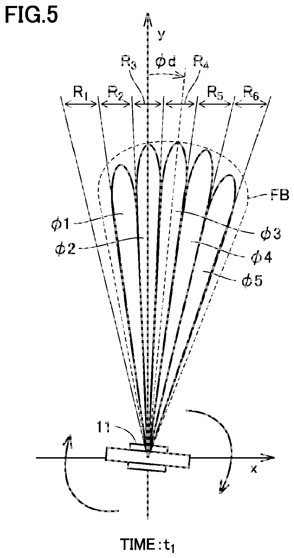

FIG. 4 is a conceptual diagram showing shapes of a transmission fan beam and reception pencil beams when the array antenna is oriented in a certain azimuth direction. FIG. 5 is a conceptual diagram showing shapes of a transmission fan beam and reception pencil beams when the azimuth direction of the array antenna is rotated by an angle φd from the azimuth direction thereof shown in FIG. 4. In FIG. 4, the orientation direction of array antenna 11 is defined as Y axis direction, and the direction orthogonal to the Y axis direction in the horizontal plane is defined as X axis direction.

In the state shown in FIG. 4, reception pencil beams φ1 to φ5 are used to observe respective azimuth ranges R₁ to R₅ that are angular ranges in respective azimuth directions. In the state shown in FIG. 4 (time t = t₀), observation of azimuth range R₃ is performed using reception pencil beam φ3. As a certain time elapses (time t = t₁ > t₀), the weather radar apparatus in the present embodiment is in the state shown in FIG. 5. In FIG. 5, array antenna 11 is rotated mechanically to be oriented in the direction at angle φd from the Y axis. The azimuth at which array antenna 11 is oriented is referred to as antenna azimuth herein. Strictly speaking, the antenna azimuth is an azimuth component of a direction perpendicular to a radio wave radiating surface of array antenna 11. The antenna azimuth is generated from an angular signal provided from antenna driver 15. The antenna azimuth is supplied to reception beam allocator 19. Based on the antenna azimuth, reception beam allocator 19 allocates reception pencil beams φ1 to φ5 so as to be used for observing each of azimuth ranges R₂ to R₆.

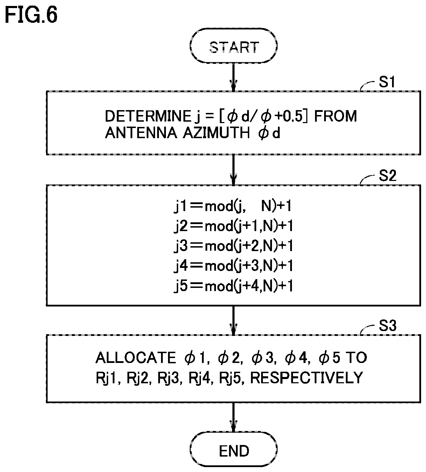

FIG. 6 is a flowchart illustrating a process for reallocating reception pencil beams, as shown in FIGs. 4 and 5. Each time reception beam allocator 19 is activated, antenna azimuth φd at that time is supplied and the process in FIG. 6 is performed. The number of azimuth ranges is supposed to be N. One azimuth range Rⱼ has an angular width φ = (360/N).

In step S1, reception beam allocator 19 determines j = [φd / φ+0.5] from antenna azimuth φd supplied from antenna driver 15. [X] is the Gauss symbol and represents a minimum integer less than or equal to real number X.

In step S2, j1 = mod(j,N) + 1 and so forth are determined, where mod(X,Y) is the remainder of the division of integer X by integer Y, and j1 is an index of azimuth range R to which reception pencil beam φ1 is allocated. J2 to j5 are determined as well as j1.

In step S3, reception pencil beams φ1 to φ5 are allocated to respective azimuth ranges Rⱼ₁ to Rⱼ₅.

The conventional method conducts observation in the azimuth direction using a single pencil beam. For observation of rain clouds or the like, the direction of each of the pencil beams is required to be restricted within a predetermined angular width until a predetermined number of observation hits (32 hits, for example) are obtained. This restriction imposes an upper limit on the speed of antenna's mechanical rotation in the azimuth direction.

In contrast, according to the method in the first embodiment, for any azimuth range, a reception pencil beam among pencil beams φ1 to φ5 in five respective azimuth directions is successively allocated to and used for the azimuth range. According to this method, the number of observation hits for each azimuth range for each one full mechanical rotation of the antenna is five times as large as the number of observation hits when a single reception pencil beam in an azimuth direction is used. This means that the mechanical scanning speed (rotational speed) of the antenna can be made five times as large as the conventional method, on the condition that the number of observation hits for each azimuth range is the same.

For example, for a conventional weather radar using a fan beam narrow in the azimuth direction and wide in the elevation angle direction, it takes 20 seconds to make one full rotation of an antenna in order to obtain a sufficient number of observation hits for each direction. The present embodiment can obtain the same number of observation hits by one full antenna rotation in four seconds. The fact that a weather radar apparatus can conduct observation in all the directions in four-second cycles makes it possible to track and observe a local phenomenon such as tornado or so-called spot heavy rain in which very heavy rain falls on a small area. Moreover, in the present embodiment, the time required to conduct observation in all the azimuth directions and all the elevation angle directions is shorter than that of the conventional method.

Thus, after the reception pencil beams are formed by DBF, weather observer 21 performs a process for calculating the intensity of rainfall or snowfall and/or various types of observation information, in consideration of transmission gain, reception gain, and various losses, for received signals of the reception pencil beams in respective elevation angle ranges and respective azimuth ranges, based on information about the shapes of the transmission fan beam and reception pencil beams being used.

While array antenna 11 is rotated in the azimuth direction by antenna driver 15, the above-described process is performed through electronic scanning in a range from a low elevation angle to a high elevation angle. By repeating this processing, three-dimensional weather information is obtained.

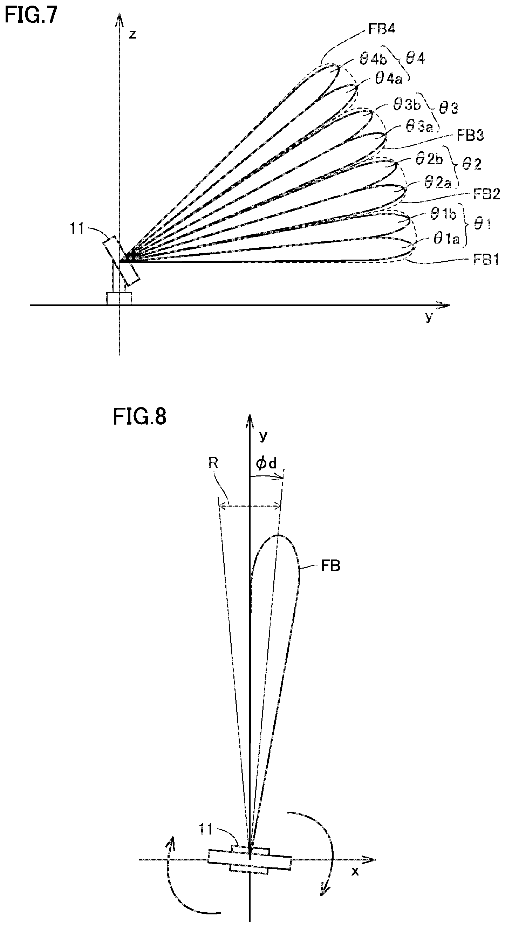

FIG. 7 illustrates a method for observing a target region in a plurality of elevation angle directions by transmission beams and reception beams. For observation using a transmission fan beam FB1, a reception pencil beam group θ1 (beams θ1a and θ1b) is used to conduct observation in two elevation angle directions simultaneously. Using reception pencil beam groups θ1 to θ4 by turns, the weather radar apparatus can observe a target space as a three dimensional space.

As described above, the weather radar apparatus in the first embodiment achieves the effects that the target ranges in the azimuth direction that can be observed simultaneously can be expanded, and that an adequate number of observation hits can be ensured when the antenna is mechanically driven rapidly in the azimuth direction.

### Second Embodiment

In the first embodiment, observation of a certain azimuth range is continued while rotating the array antenna mechanically in the azimuth direction, by changing the reception pencil beam to be allocated to the azimuth range. The center of the reception pencil beam newly allocated to this azimuth range, however, is displaced from the center of the azimuth range because the array antenna is rotated in the azimuth direction, and observation condition becomes different from the condition at the previous observation. In order to enhance the observation accuracy, it is desirable to obtain a predetermined number of observation hits at the same azimuth. In view of this, according to a second embodiment, in addition to the process in the first embodiment, an angular signal (antenna azimuth) sent from antenna driver 15 to signal processor 14 is used for observation by the array antenna being driven in the azimuth direction, and phase control and weighting-factor control of reception beam former 18 are performed. Accordingly, the orientation direction of the reception pencil beam in the transmission fan beam in the azimuth direction can be corrected to perform observation with the reception pencil beam in the same azimuth direction when the orientation direction of array antenna 11 is changed.

FIG. 8 shows an example where a single reception pencil beam is used in the azimuth direction. In the case of the conventional phased array type weather radar and parabola antenna type weather radar that do not perform beam control in the azimuth direction, the azimuth direction of the transmission beam and the azimuth direction of the reception pencil beam change with time, depending on azimuth angle φd of the mechanically-driven antenna. Accordingly, as shown in FIG. 8, observation is performed in the direction displaced by an angle determined depending on φd with respect to observation range R.

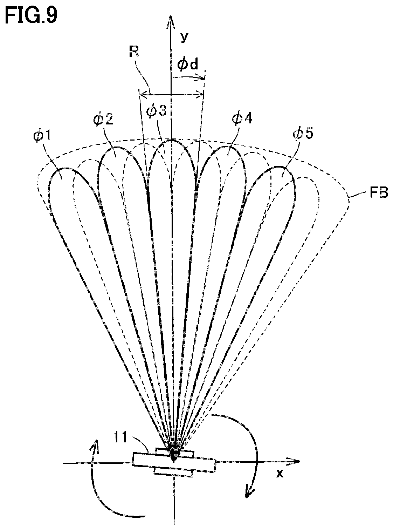

FIG. 9 shows a manner in which the weather radar apparatus in the second embodiment generates reception pencil beams of which respective directions are corrected. In a case where the direction of each generated reception pencil beam relative to the direction of array antenna 11 is unchanged, the generated reception pencil beams are displaced as indicated by broken lines in FIG. 9 with respect to corresponding divisions of azimuth ranges, as well as fan beam FB is displaced. A reception beam former 18A of the weather radar apparatus in the second embodiment changes the azimuth directions of reception pencil beams relative to the direction of array antenna 11 so as to form a plurality of reception pencil beams matched with corresponding divisions of azimuth ranges. Accordingly, as indicated by solid lines in FIG. 9, five reception pencil beams φ1 to φ5 are oriented leftward to some extent with respect to fan beam FB. The displacement of the azimuth is determined in accordance with a flow shown in FIG. 6, for example, so that the reception pencil beam allocated to its corresponding azimuth range R is located at the center of its azimuth range Rⱼ. In a case where the orientation φd of the antenna is displaced by more than or equal to 1/2 of width φ of azimuth range Rⱼ, selected azimuth ranges to which the reception beams are allocated are changed and the amount of correction changes from -φ/2 to φ/2. In this way, when the orientation of the antenna is changed as the antenna is mechanically driven to rotate at a certain angular speed on the azimuth axis, observation range Rⱼ can be observed at an observation azimuth direction that is a predetermined azimuth direction.

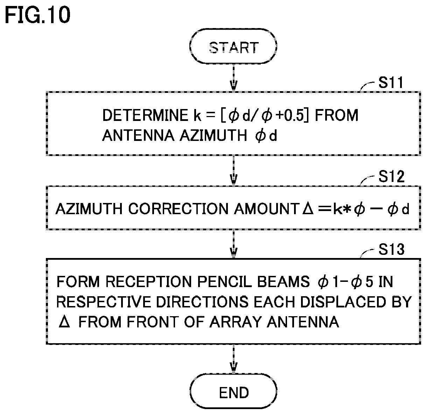

FIG. 10 is a flowchart illustrating a process for correcting the angle of reception pencil beams shown in FIG. 9. The process in FIG. 10 is performed each time reception beam former 18A is activated and antenna azimuth φd at this time is supplied.

In step S11, integer k representing an azimuth range to which reception pencil beam φ3 formed right in front of array antenna 11 is allocated is determined to be k = [φd / φ+0.5]. k = 0 means that reception pencil beams φ1 to φ5 are allocated to azimuth ranges R₁ to R₅, respectively. Reception pencil beam φ3 is perpendicular to the radio wave radiating surface of array antenna 11.

In step S12, azimuth correction amount Δ is determined by a mathematical expression Δ = k*φ - φd. Δ = 0 means that reception pencil beam φ3 is perpendicular to the radio wave radiating surface of array antenna 11. Azimuth correction amount Δ is in a range φ/2 > Δ ≥ -φ/2. Δ > 0 means that reception pencil beam φ3 is corrected in the direction in which the antenna is rotated. In step S13, reception pencil beams φ1 to φ5 are formed in respective directions each displaced by azimuth correction amount Δ with respect to the front surface (direction perpendicular to the radio wave radiating surface) of the array antenna.

In a case where observation equivalent to the observation shown in FIG. 9 is to be performed by the conventional weather radar, it is necessary to repeat mechanical stopping and driving of the antenna rotation in the azimuth direction. For such mechanical driving to be achieved, a high performance driving system capable of driving at high speed with high precision is necessary. According to the second embodiment, the direction of the reception pencil beams is electronically changed in the azimuth direction, and therefore, an ordinary driving system rotating the antenna at a constant angular speed can be used to keep the resolution of the azimuth at the interval of the reception pencil beams.

### Third Embodiment

A weather radar apparatus in a third embodiment is characterized in that it has an observation mode in which array antenna 11 is kept stationary in an observation direction, an observation range is divided into subdivisions, transmission fan beams are radiated for respective subdivisions, and observation of the range of each transmission fan beam is performed using a plurality of reception pencil beams, in addition to the process explained in the first embodiment. The observation direction and the observation range are supplied externally.

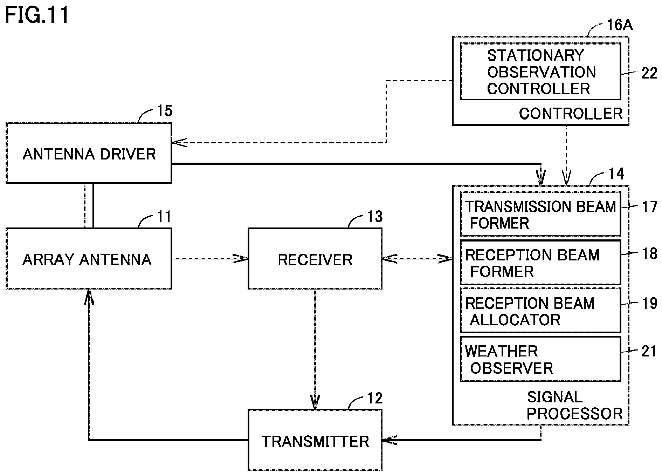

FIG. 11 shows a configuration of the weather radar apparatus in the third embodiment. A controller 16A includes therein a stationary observation controller 22. Controller 16A, specifically stationary observation controller 22 controls antenna driver 15, reception beam former 18, reception beam allocator 19, and weather observer 21 so that they operate in the following manner. Antenna driver 15 keeps array antenna 11 stationary at a stationary observation azimuth direction that is an azimuth at which array antenna 11 is oriented during stationary observation. The stationary observation azimuth direction and an observation pattern are specified by an operator. In the stationary state, the observation radar apparatus observes a stationary observation range that is a predetermined range of the elevation angle and the azimuth including the stationary observation azimuth direction, in accordance with a pattern specified among about 50 predetermined patterns. These observation patterns differ from each other in the size of the stationary observation range, the interval of reception beams in the stationary observation range and the like. Transmitter 12 generates such a plurality of transmission fan beams that the plurality of transmission fan beams cover whole of the stationary observation range and that each of the plurality of transmission fan beams covers a divided portion in the stationary observation range. Reception beam former 18, reception beam allocator 19, and weather observer 21 operate to form a plurality of reception beams for each transmission fan beam and obtain information about the results of the weather observation of the stationary observation range.

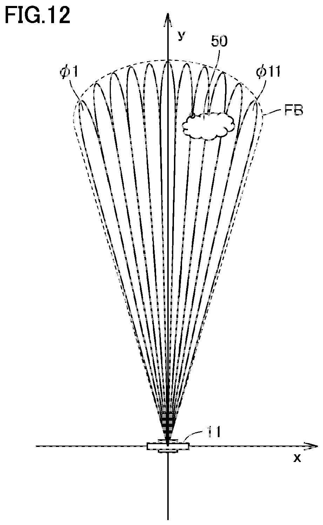

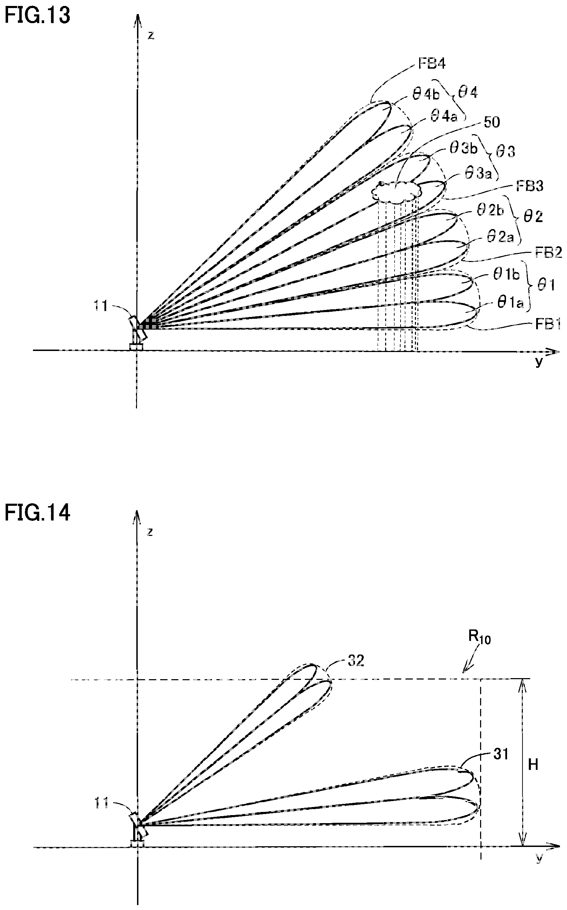

FIG. 12 shows a manner in which the weather radar apparatus in the third embodiment observes an azimuth range having a predetermined angular width without mechanically driving the antenna, in order to observe a local weather phenomenon. FIG. 13 shows a manner in which the weather radar apparatus in the third embodiment generates a plurality of transmission fan beams in the elevation angle direction that are different from each other in the elevation angle range, in order to observe the local weather phenomenon. A plurality of transmission fan beams may cover respective portions constituting the azimuth range. A transmission fan beam narrow in the azimuth direction and wide in the elevation angle direction may be generated. The transmission fan beams having any shape may be generated, as long as such a plurality of transmission fan beams that cover whole of the stationary observation range and that each of the plurality of transmission fan beams covers a divided portion of the stationary observation range are generated.

In an example in FIG. 12, 11 reception pencil beams φ1 to φ11 are shown. As shown in FIG. 12, a broad azimuth range can be observed without mechanically driving the antenna, and therefore, a local weather phenomenon (rain cloud 50 for example) can be kept observed at a high frequency. As to the elevation angle direction as shown in FIG. 13, electronic scanning in the elevation angle direction like the electronic scanning in FIG. 7 can be performed to observe the range where the local weather phenomenon occurs as a three-dimensional range. The weather radar apparatus in the third embodiment is not required to drive mechanically the antenna during observation and therefore, observation at a high frequency can be achieved. When an area of heavy rain such as spot heavy rain or the like is moving, antenna driver 15 changes the orientation of array antenna 11 as required so that the target to be observed is located at the center of the observation range and thus the weather phenomenon to be observed is kept within the stationary observation range.

For example, when a local weather phenomenon is detected by the operation described above in the first or second embodiment, the observation mode can be changed as described in the third embodiment to focus on and observe the local weather phenomenon.

### Fourth Embodiment

In a fourth embodiment, a transmission fan beam wide in the azimuth direction and an array of reception pencil beams in which the number of reception pencil beams arranged in the azimuth direction is larger than that in the elevation angle direction are used as illustrated in the first embodiment, and additionally, the shapes of these beams are changed as described below.

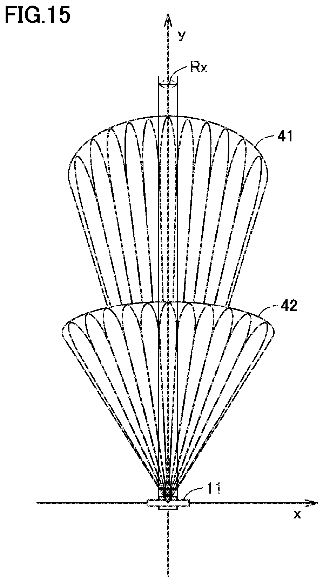

FIG. 14 shows differences in beam shape in the elevation angle direction, between beams at a high elevation angle and beams at a low elevation angle, in the weather radar apparatus in the fourth embodiment. FIG. 15 shows differences in beam shape in the azimuth direction, between beams at the high elevation angle and beams at the low elevation angle, in the weather radar apparatus in the fourth embodiment.

In the fourth embodiment, for observation at a high elevation angle, a transmission fan beam wider in the azimuth direction than a transmission fan beam at a low elevation angle is transmitted, and reception pencil beams having wider intervals in the azimuth direction than reception pencil beams at a low elevation angle are formed.

A weather phenomenon to be observed occurs at an altitude that is less than or equal to a predetermined height H. Therefore, as shown in FIG. 14, when an observation range R₁₀ is to be observed, the required beam length at a high elevation angle is different from the required beam length at a low elevation angle. More specifically, the distance to be observed by a transmission fan beam and reception pencil beams 32 at the high elevation angle may be shorter than the distance to be observed by a transmission fan beam and reception pencil beams 31 at the low elevation angle.

In a case where fan-shaped beams have the same central angle, a fan-shaped beam transmitted for observing a target at a short distance only is smaller in volume of the beam than a fan-shaped beam transmitted for observing a target at a long distance. As shown in FIG. 15, it is supposed that the distance to the target of a transmission fan beam and reception pencil beams 42 for short-distance observation is one half as long as the distance to the target of a transmission fan beam and reception pencil beams 41 for long-distance observation. In this case, when the central angle of beams 42 is made twice as large as the central angle of beams 41, the horizontal distance resolution at the maximum observation distance of beams 42 can be equivalent to the resolution of beams 41. Thus, for the short-distance observation, the azimuth central angle of the transmission fan beam can be increased and the azimuth interval of reception pencil beams can be increased to expand the range observed at a time by short-distance observation, and accordingly the observation time can be shortened.

Referring again to the drawings, the first to fourth embodiments are summarized. The weather radar apparatus shown in FIG. 1 includes array antenna 11, antenna driver 15, transmitter 12, reception beam former 18, reception beam allocator 19, and weather observer 21. Array antenna 11 includes antenna elements arranged in a horizontal direction and an elevation angle direction to radiate transmission waves into space and receive reflected waves which are the transmission waves reflected from space. Antenna driver 15 rotates array antenna 11 mechanically in an azimuth direction. Transmitter 12 controls amplitudes and phases of the transmission waves radiated from the antenna elements so as to form a transmission fan beam having a central angle more than or equal to a predetermined angular width in the azimuth direction. Reception beam former 18 processes reception signals generated by the antenna elements from the reflected waves for each of the transmission fan beam so as to form a plurality of reception beams in the azimuth direction. Reception beam allocator 19 receives an antenna azimuth which is an azimuth at which array antenna 11 rotated by antenna driver 15 is oriented, and allocates the reception beams to respective azimuth ranges which are each a predetermined range of azimuth. Weather observer 21 obtains information about results of weather observation for the azimuth ranges, from the reception beams allocated to the respective azimuth ranges by reception beam allocator 19.

Preferably, as shown in FIG. 3, a plurality of reception pencil beams include a plurality of first reception pencil beams θ1a formed in a first elevation angle direction, and a plurality of second reception pencil beams θ1b formed in a second elevation angle direction. As shown in FIG. 7, signal processor 14 performs scanning in the elevation angle direction by the first reception pencil beams θ1a and the second reception pencil beams θ1b simultaneously. In this way, respective positions indicated by reception pencil beams θ1a to θ4a and θ1b to θ4b are observed successively.

Preferably, as described above with reference to FIGs. 9 and 10, depending on an angle φd by which array antenna 11 is rotated by antenna driver 15 in azimuth direction, signal processor 14 changes the azimuth direction of each of a plurality of reception pencil beams φ1 to φ5 with respect to the radio wave radiating surface of array antenna 11, so that the orientation directions of a plurality of reception pencil beams φ1 to φ5 become predetermined azimuth directions.

Preferably, as described above with reference to FIGs. 14 and 15, transmitter 12 forms first transmission fan beams 32, 42 in a first elevation angle range and forms second transmission fan beams 31, 41 in a second elevation angle range lower than the first elevation angle range, so that the first transmission fan beams are larger in the central angle in the azimuth direction than the second transmission fan beams. Reception beam former 18 forms a plurality of reception beams 32, 42 in the first elevation angle range and a plurality of reception beams 31, 41 in the second elevation angle range, so that reception beams 32, 42 have the azimuth interval larger than the azimuth interval of reception beams 31,41.

Preferably, the weather radar apparatus has a first observation mode and a second observation mode. During observation in the first observation mode, the weather radar apparatus performs observation while rotating array antenna 11 mechanically in the azimuth direction. As described above with reference to FIGs. 12 and 13, in the second observation mode, the weather radar apparatus does not drive array antenna 11 mechanically, but observes a predetermined range of the azimuth including a specified azimuth and the elevation angle. The first observation mode is the observation mode described above in the first or second embodiment, and the second observation mode is the observation mode described above in the third embodiment.

It should be construed that the embodiments disclosed herein are given by way of illustration in all respects, not by way of limitation. It is intended that the scope of the present disclosure is defined by claims, not by the description above, and encompasses all modifications equivalent in meaning and scope to the claims.

### REFERENCE SIGNS LIST

- 11: array antenna
- 12: transmitter
- 13: receiver
- 14: signal processor
- 15: antenna driver
- 16, 16A: controller
- 17: transmission beam former
- 18, 18A: reception beam former
- 19: reception beam allocator
- 21: weather observer
- 22: stationary observation controller
- 50: rain cloud
- φ1-φ5, θ1a-θ4a, θ1b-θ4b: reception pencil beam
- FB, FB1-FB4: transmission fan beam

## Claims

1. A weather radar apparatus comprising:
- an array antenna, including antenna elements arranged in a horizontal direction and an elevation angle direction, to radiate transmission waves into space and receive reflected waves being the transmission waves reflected from space;
- an antenna driver to rotate the array antenna mechanically in an azimuth direction;
- a transmitter to control the antenna elements to radiate the transmission waves with controlled amplitudes and phases respectively so as to form a transmission fan beam formed in a sector having a central angle more than or equal to a predetermined angular width in the azimuth direction;
- a reception beam former to process reception signals each generated by each of the antenna elements from the reflected waves for each of the transmission fan beams so as to form a plurality of reception beams in the azimuth direction;
- a reception beam allocator, receiving an antenna azimuth being an azimuth at which the array antenna, rotated by the antenna driver, is oriented, to allocate the reception beams to azimuth ranges, the azimuth ranges each being a predetermined range of azimuth respectively; and
- a weather observer to obtain information about a result of weather observation for each of the azimuth ranges, from the reception beams allocated to the azimuth range by the reception beam allocator.

2. The weather radar apparatus according to claim 1,
wherein the reception beam former receives the antenna azimuth and forms the reception beams by changing an azimuth direction of each of reception beams relative to the array antenna, depending on the antenna azimuth, so that the reception beams are directed at observation azimuth directions determined for the azimuth ranges to which the reception beams are allocated respectively.

3. The weather radar apparatus according to claim 1 or 2,
wherein the reception beam former generates the reception beams in the azimuth direction and the elevation angle direction.

4. The weather radar apparatus according to claim 3,
wherein the transmitter forms a first transmission fan beam in a first elevation angle range and a second transmission fan beam in a second elevation angle range lower than the first elevation angle range so that the first transmission fan beam has a larger azimuth central angle than that of the second transmission fan beam, and the reception beam former forms reception beams in the first elevation angle range and reception beams in the second elevation angle range, the reception beams in the first elevation angle range having an azimuth interval larger than an azimuth interval of the reception beams in the second elevation angle range.

5. The weather radar apparatus according to any one of claims 1 to 4,
comprising a controller to control the antenna driver, the transmitter, the reception beam former, the reception beam allocator, and the weather observer, wherein the controller controls the antenna driver to make the array antenna oriented to and kept at a stationary observation azimuth direction, the stationary observation azimuth direction being an azimuth at which the array antenna is oriented during stationary observation,
the controller controls the transmitter to generate such a plurality of transmission fan beams that the plurality of transmission fan beams cover whole of a stationary observation range and that each of the plurality of transmission fan beams covers a divided portion of the stationary observation range, the stationary observation range being a predetermined range of elevation angle and azimuth including the stationary observation azimuth direction, and
the controller controls the reception beam former, the reception beam allocator, and the weather observer to form the reception beams for each the transmission fan beam and obtain information about a result of weather observation of the stationary observation range.
